# EUROPEAN PATENT SPECIFICATION

(11) **EP 3 331 270 B1**
(45) Date of publication and mention of the grant of the patent: **27.11.2019**
(21) Application number: 16202150.5
(22) Date of filing: 05.12.2016
(51) Int. Cl.: H04L 12/859, H04L 12/851

(54) **METHOD FOR TRANSMITTING DATA AND COMMUNICATION DEVICE**
VERFAHREN ZUR DATENÜBERTRAGUNG UND KOMMUNIKATIONSVORRICHTUNG
PROCÉDÉ DE TRANSMISSION DE DONNÉES ET DISPOSITIF DE COMMUNICATION

(43) Date of publication of application: 06.06.2018
(73) Proprietor: NTT DOCOMO, INC., Chiyoda-ku Tokyo 100-6150 (JP)
(72) Inventor: MUTIKAINEN, Jari, 80687 Munich (DE); SAMA, Malla Reddy, 80687 Munich (DE)
(74) Representative: Viering, Jentschura & Partner mbB Patent- und Rechtsanwälte

(56) References cited:
- EP-A2- 2 800 328
- US-A1- 2014 233 380
- US-A1- 2015 222 489
- SAMSUNG: "Uplink Reflective QoS", 3GPP DRAFT; S2-166597_UPLINK REFLECTIVE QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, US; 20161114 - 20161118 14 November 2016 (2016-11-14), XP051185156, Retrieved from the Internet: URL:http://www.3gpp.org/ftp/Meetings_3GPP_ SYNC/SA2/Docs/ [retrieved on 2016-11-14]
- NSN ET AL: "Using DSCP for Packet Marking", 3GPP DRAFT; S2-141440_WAS1379_WAS1058_UPCON_P-CR_DSCP- FOR-PACKET-MARKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. SA WG2, no. St. Julian; 20140324 - 20140328 27 March 2014 (2014-03-27), XP050804340, Retrieved from the Internet: URL:http://www.3gpp.org/ftp/Meetings_3GPP_ SYNC/SA2/_Update04/ [retrieved on 2014-03-27]

## Description

Various embodiments relate to methods for transmitting data and communication devices.

Standardization for 5G (Fifth Generation) networks is currently ongoing in 3GPP (Third Generation Partnership Project). In 5G, approaches for IP flow based Quality of Service (QoS) are considered where each IP flow is assigned with a Flow Priority Indicator (FPI) which indicates a priority level of the IP flow. However, the determination of the correct Flow Priority Indicator is typically not trivial. Accordingly, approaches are desirable which allow an efficient and accurate determination of Flow Priority Indicators for IP flows.

US 2014/0233380 A1 discloses a method of managing uplink quality of service of a user equipment.

US 2015/0222489 A1 discloses a method of classifying packets associated to at least one amongst a service and an application.

Samsung; "Uplink Reflective QoS"; 3GPP Draft; S2-166597; SA WG2 Meeting 118; November 14-18, 2016; Reno, US: it is disclosed to apply the reflective QoS mechanism to uplink direction.

NSN et. al.; "Using DSCP for Packet Marking"; 3GPP Draft; S2-141440; SA WG2 Meeting 102; March 24-28, 2014; St. Julian's, Malta: it is disclosed to use DSCP in the inner IP header as an additional option when using packet marking.

EP 2 800 328 A2 discloses a method for controlling quality of service.

In various embodiments, a method for transmitting data is provided including detecting a plurality of different first Internet Protocol (IP) flow connections for a first application, wherein each IP flow connection of the plurality of first IP flow connections has assigned a respective QoS-IP flow priority indicator, determining a first QoS-IP flow priority indicator that is assigned to a first IP flow connection of the detected plurality of first IP flow connections, identifying the first application, wherein the first IP flow connection is targeted to the first application, storing the determined first QoS-IP flow priority indicator with a corresponding reference referring to the first application and referring to the first IP flow connection if the first QoS-IP flow priority indicator is not a default QoS-IP flow priority indicator, detecting a plurality of different second IP flow connections for a second application, wherein each IP flow connection of the plurality of second IP flow connections has assigned a respective QoS-IP flow priority indicator, determining a second QoS-IP flow priority indicator that is assigned to a second IP flow connection of the detected plurality of second IP flow connections, identifying the second application, wherein the second IP flow connection is targeted to the second application, storing the determined second QoS-IP flow priority indicator with a corresponding reference referring to the second application and referring to the second IP flow connection if the second QoS-IP flow priority indicator is not the default QoS-IP flow priority indicator, an application of the first application and the second application generating data to be transmitted via an IP flow connection, identifying the application which generates the data to be transmitted, selecting a stored QoS-IP flow priority indicator if the QoS-IP flow priority indicator is stored with a corresponding reference referring to the application and referring to the IP flow connection, selecting the default QoS-IP flow priority indicator if no QoS-IP flow priority indicator is stored with a corresponding reference referring to the application and referring to the IP flow connection, and transmitting the generated data via the IP flow connection based on the selected QoS-IP flow priority indicator.

According to further embodiments a communication device according to the method for transmitting data described above is provided.

In the drawings, the same reference characters generally refer to the same parts throughout the different views. The drawings are not necessarily to scale, emphasis is instead generally being placed upon illustrating the principles of the invention. In the following description, various embodiments of the invention are described with reference to the following drawings, in which:
- Figure 1: shows a portion of a radio communication system illustrating a communication flow in downlink direction in accordance with various embodiments.
- Figure 2: shows a portion of a radio communication system illustrating a communication flow in uplink direction in accordance with various embodiments.
- Figure 3: illustrates another IP flow based QoS framework.
- Figure 4: illustrates an example of an alternative IP flow based QoS framework.
- Figure 5: shows a comparison of the performance of the approach described with reference to figure 2 and the approach described with reference to figure 4.
- Figure 6: shows a flow diagram illustrating a method for transmitting data.
- Figure 7: shows a communication device.

The following detailed description refers to the accompanying drawings that show, by way of illustration, specific details and embodiments in which the invention may be practiced.

The words "exemplary" and "example" are used herein to mean "serving as an example, instance, or illustration". Any embodiment or design described herein as "example" is not necessarily to be construed as preferred or advantageous over other embodiments or designs.

As used herein, a "circuit" may be understood as any kind of a logic implementing entity, which may be special purpose circuitry or a processor executing software stored in a memory, firmware, and any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, e.g., any kind of computer program, for example, a computer program using a virtual machine code, e.g., Java. Any other kind of implementation of the respective functions that will be described in more detail below may also be understood as a "circuit". It may also be understood that any two (or more) of the described circuits may be combined into one circuit.

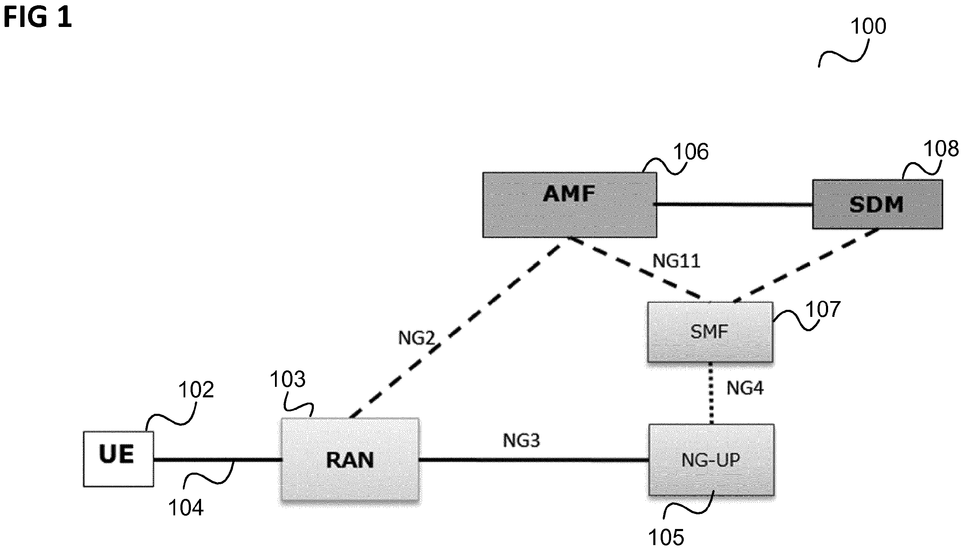

Figure 1 shows a portion of a radio communication system 100 illustrating a communication flow in downlink direction in accordance with various embodiments.

As shown in figure 1, the radio communication system 100 includes a radio communication terminal device 102 such as a UE (user equipment), a nano equipment (NE), and the like.

Furthermore, the radio communication system 100 includes a radio access network 103, which may include a plurality of radio access network nodes, i.e. base stations configured to provide radio access in accordance with a 5G (Fifth Generation) radio access technology (5G New Radio). Each radio access network node may provide a radio communication with the radio communication terminal device 102 over an air interface 104. It should be noted that the radio access network 103 may include any number of radio access network nodes.

The radio communication system 100 may further include a core network including NextGen Core User Plane Function (NG-UP) 105, connected to the RAN 103, an Access and Mobility Management Function (AMF) 106 connected to the RAN 103 is coupled, a Session Management Function (SMF) 107 and a Subscriber Database Management 108.

The core network may be coupled to the Internet. The Internet may include a plurality of client and server devices, wherein a server may provide one or more communication services. By way of example, a communication connection, for example communication session, of a communication service such as for example an application program, is one example of an end-to-end-connection. This end-to-end-connection may include or may be an Internet Protocol (IP) connection, which may also be referred to as an IP flow. The IP connection may be uniquely identified by two Internet Protocol (IP) addresses, namely a source IP address and a destination IP address, source port number, destination port number and transport protocol. It is to be noted that the end-to-end-connection may be between two server devices (e.g. a server computer, such as for example an application server computer in the Internet), a terminal device (e.g. a radio communication terminal device) and a server device, or between two terminal devices (e.g. between two radio communication terminal devices).

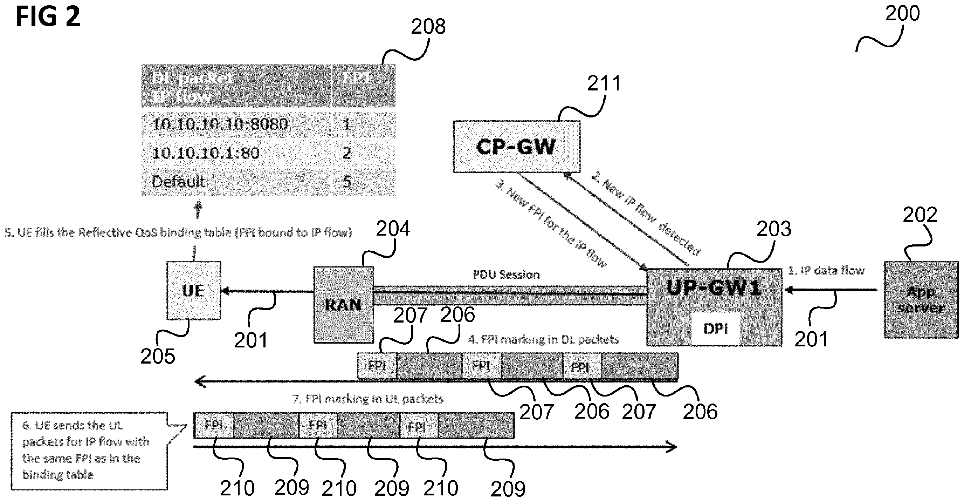

According to 3GPP (Third Generation Partnership Project), an IP flow based QoS framework is considered which introduces a Flow Priority Indicator (FPI) to indicate the priority level of the IP flow and which is illustrated in figure 2.

Figure 2 illustrates an IP flow based QoS framework.

The key concept of this framework can be seen in the ability to assign a different priority level for each service carried by an IP flow 201 in downlink (DL) direction i.e. from the network including application server 202, a user plane (UP) gateway 203, a control plane (CP) gateway 211 (which includes mobility management and session management functions) and a RAN (radio access network) 204 to a UE 205, and then mark the DL packets 206 with the corresponding FPI 207. The FPI indicates the priority level of the IP flow 201 within one single core network bearer or tunnel. A different priority level may be assigned for each service carried by the IP flow in the network bearer or tunnel.

The RAN 204 takes the FPI 207 into account in downlink scheduling prioritization. For operation in the uplink direction, a so called Reflective QoS solution applies i.e. the RAN 204 indicates the FPI 207 to the UE 205 via the radio level headers in user plane (e.g. at PCDP layer) in downlink direction and the UE then creates a binding table 208 of the downlink IP flow (as identified by the 5-tuple of source / destination IP, source / destination ports as well as protocol identifier) and the corresponding FPI.

When the UE 205 is about to send uplink data, the UE 05 searches the binding table 208 for the IP flow of the uplink packets 209, and uses the corresponding FPI 210 for prioritization, and RAN uses the FPI for uplink scheduling prioritization. As a result, the priority of the IP flow in uplink direction 'reflects' the priority of the same IP flow 201 in the downlink direction.

An issue with the Reflective QoS approach is that it relies on the use of DPI (deep packet inspection) in the network to detect the IP flows that belong to particular application which requires a specific QoS treatment. As the DPI operation is never perfect, it may be the DPI does not detect all IP flows which belong to certain application and therefore those packets would get the default QoS treatment in the network. This may especially be an issue with applications that use encryption (e.g. HTTPS/TLS) and multiple different destination IP addresses and ports.

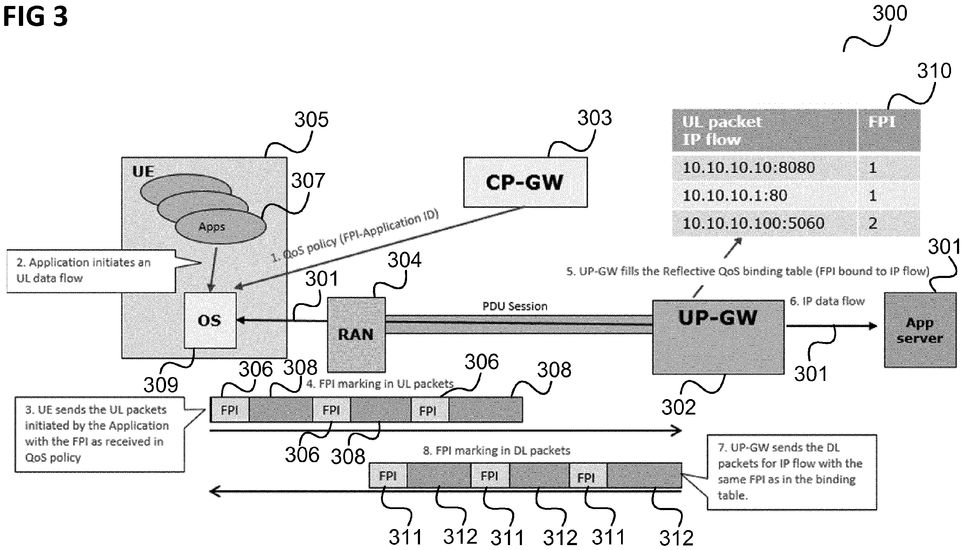

Figure 3 illustrates another IP flow based QoS framework.

According to this approach, the operator of a network (including application server 301, a user plane (UP) gateway 302, a control plane (CP) gateway 303 and a RAN (radio access network) 304 uploads a policy into a UE 305 that instructs the UE 305 to use a certain QoS flow priority indication (FPI) 306 for a particular application 307. The UE 305 assigns this FPI 306 to all uplink packets 308 initiated by this application 307 (this is for example managed by the UE's operating system 309).

The network then maintains a similar binding table 310 as in the example of figure 2 and assigns the same FPI 311 to all downlink packets 312 of the same IP flow. The RAN 304 uses the FPI for uplink and downlink scheduling prioritization. A benefit of this approach over the one described with reference to figure 2 is that it does not rely on accuracy of the DPI. However, an issue with this approach is that it requires the operator to maintain a (possibly frequently changing) QoS policy of FPIs for applications and keep it up-to-date in the UEs.

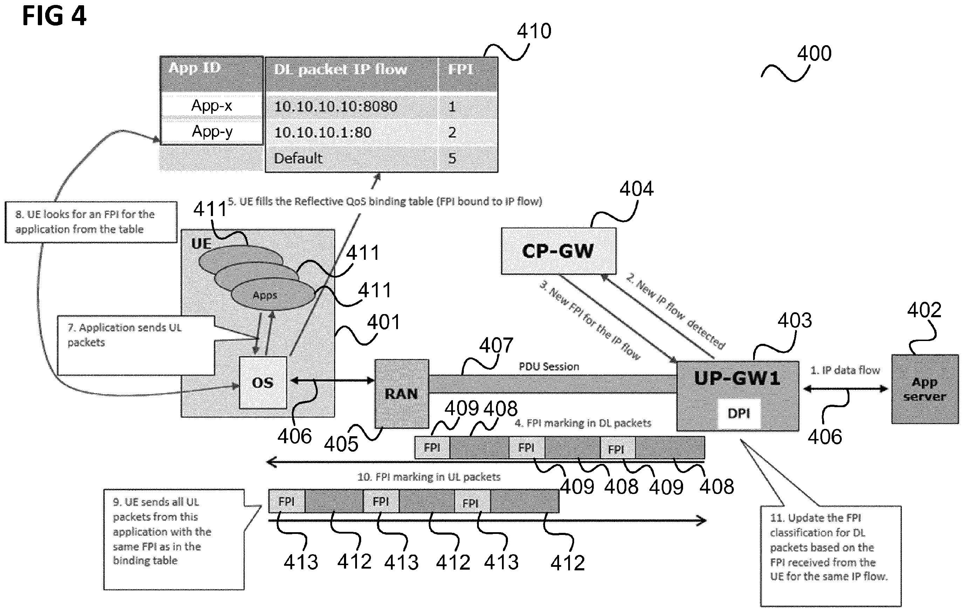

In view of the above issues an alternative approach is provided, an example of which is illustrated in figure 4. Figure 4 illustrates an example of an alternative IP flow based QoS framework.

Similarly to figure 2, the network side is represented by an application server 402, a user plane (UP) gateway 403, a control plane (CP) gateway 404 and a RAN (radio access network) 405.

When an IP data flow 406 is established, the UP gateway 403 detects this and reports it to the CP gateway 404. In response, the CP gateway 404 sets an FPI for this IP flow. Further, a PDU session 407 is established between the UP gateway 403 and the RAN 405 to transmit data to and receive data from a UE 401.

Similarly to the approach of figure 2, the UP gateway 403 uses a DPI-based procedure to detect IP flows in the network. Specifically, for the IP data flow 406, the UP gateway 403 classifies and marks the downlink packets 408 with an FPI 409 as set by the CP gateway 404.

The UE 401 maintains a binding table 410 specifying a correspondence of applications 411 (first column) with IP flows (second column) and their assigned FPIs (third column). The UE 401, after filling the binding table 410, upon reception of the downlink packet marked with an FPI other than a default FPI, determines the identity of the application 411 within the UE 410 where this downlink packet is targeted to, and enters the application identity into the binding table, in addition to the IP flow identification and the FPI. Whenever this application 411 sends an uplink packet, the UE 401, regardless of the IP flow of this uplink packet, uses the FPI stored in the binding table for this application 410, i.e. marks all UL packets 412 with the FPI 413 associated with this application 410 (as specified by the binding table 410).

It should be noted that this approach can also be implemented using two binding tables. The UE 401 learns the default FPI for example at the time of the setup of the PDU session (or PDN connection) 407. The network configures (e.g. over the NG1 interface, e.g. similar to non-access stratum signaling in EPC) the QoS rules including the pre-authorized FPIs and the default FPI to the UE 401. The network may maintain a second binding table similar to the network-side binding table of figure 3. When the network receives an uplink packet with an FPI different to default FPI, it fills this FPI into the second binding table for this IP flow and uses the FPI for all upcoming downlink packets for this IP flow.

It should be noted that also within the UE there could be two separate binding tables: one maintaining the binding of IP-Flow and FPI, and another for binding between Application reference and FPI.

The approach described with reference to figure 4 allows improving the detection accuracy of IP flows compared to the approach of figure 2, but does not require the operator to maintain the policy in the UEs as in the approach of figure 3.

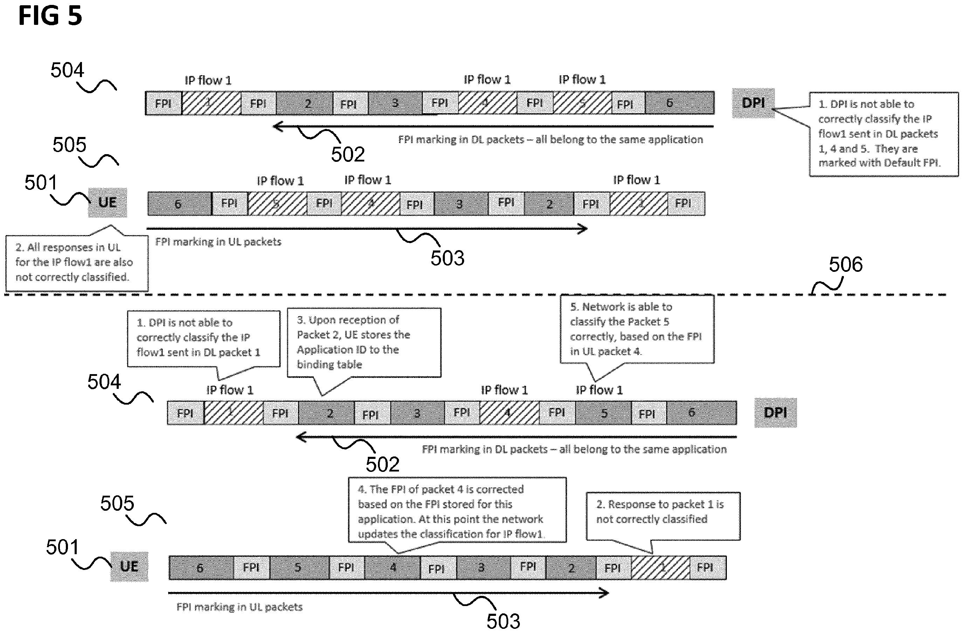

Figure 5 shows a comparison of the performance of the approach described with reference to figure 2 and the approach described with reference to figure 4.

In this example, there are six downlink packets (numbered 1 to 6) which are all destined to the same application in a UE 501 sent in downlink direction 502 from right to left and six corresponding uplink packets (numbered 1 to 6) sent in uplink direction 503 from right to left wherein each uplink packet is for example the response to the downlink packet with the same number.

A first diagram 504 (above dashed line 506) illustrates the operation with the approach of figure 2.

The Network uses DPI to classify the downlink packets and is able to determine the IP flow in the downlink packets 2, 3 and 6 correctly, therefore these packets are marked correctly with the application specific FPI. But due to the inaccuracy of the DPI the network is not able to determine the application for the IP flow in packets 1, 4 and 5 correctly (hatched), therefore these packets are marked with the default FPI. When the application in the UE 501 responds to these downlink packets, it uses the same FPI as received in downlink direction, therefore the packets 1, 4 and 5 are marked incorrectly with the default FPI also in uplink direction.

A second diagram 505 (below dashed line 506) illustrates the operation with the approach of figure 4.

Again the network uses the DPI to classify the packets, but due to the inaccuracy of the DPI the network is not able to determine the application for the IP flow in downlink packet 1. So the UE 501 responds to this packet with the default FPI, as in the case of the first diagram 501. The difference of the approach of figure 4 invention comes into play after the UE has received the downlink packet 2: Since downlink packet 2 was correctly detected and marked with the application specific FPI by the network, the UE 501 now identifies the application the packet is destined to and stores the FPI and the application identity into the binding table 410. When the network then sends the uplink packet 4 for the IP flow it did not correctly identify, it still uses the default FPI for it. But when the UE responds to downlink packet 4 with uplink packet 4, instead of using the default FPI, the UE looks up to the binding table 410 and uses the application specific FPI stored earlier.

When the network receives the uplink packet 4, as described above, it may store the FPI and the corresponding IP flow into a (second) binding table. When the network sends the downlink packet 5, it uses the application specific FPI stored in the (second) binding table, so this packet gets correct QoS treatment (i.e. is assigned with the correct FPI). So it is sufficient that the DPI in the network correctly detects just one of a plurality of IP flows for a particular application, from thereon the approach of figure 4 allows applying the correct QoS treatment for the following packets.

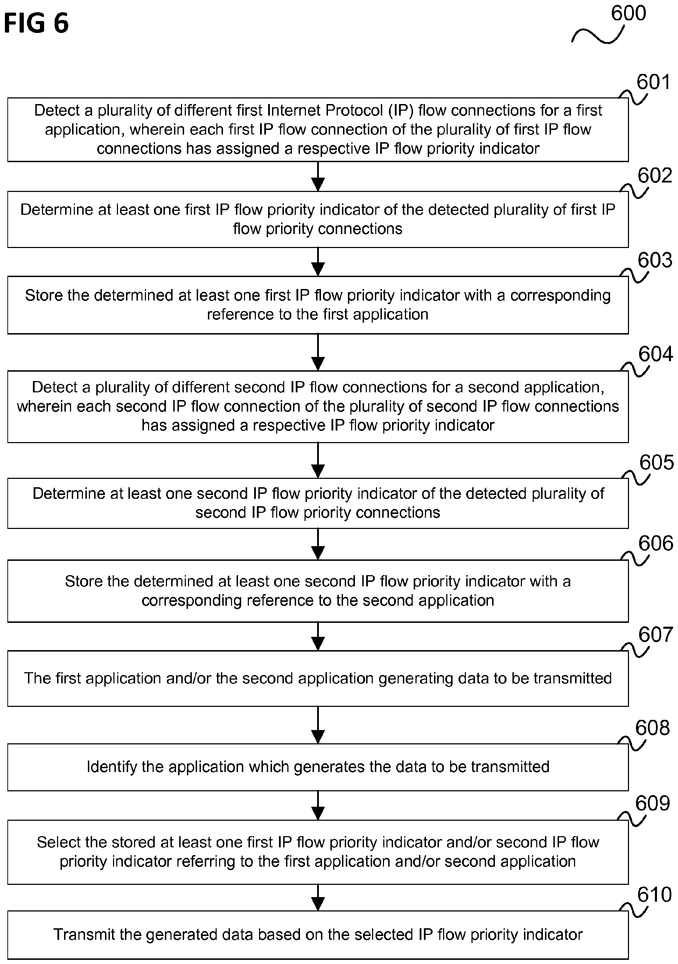

In summary, according to various embodiments, a method for transmitting data is provided as illustrated in figure 6.

Figure 6 shows a flow diagram 600.

In 601, a plurality of different first Internet Protocol (IP) flow connections for a first application are detected, wherein each first IP flow connection of the plurality of first IP flow connections has assigned a respective IP flow priority indicator.

In 602, at least one first IP flow priority indicator of the detected plurality of first IP flow connections is determined.

In 603, the determined at least one first IP flow priority indicator is stored with a corresponding reference to the first application.

In 604, a plurality of different second IP flow connections for a second application are detected, wherein each second IP flow connection of the plurality of second IP flow connections has assigned a respective IP flow priority indicator.

In 605, at least one second IP flow priority indicator of the detected plurality of second IP flow connections is determined.

In 606, the determined at least one second IP flow priority indicator is stored with a corresponding reference to the second application.

In 607, the first application and/or the second application generate data to be transmitted.

In 608, the application which generates the data to be transmitted is identified.

In 609, the stored at least one first IP flow priority indicator and/or second IP flow priority indicator referring to the first application and/or second application is selected.

In 610, the generated data is transmitted based on the selected IP flow priority indicator.

According to various embodiments, in other words, an IP flow priority is associated with the application for which the corresponding IP flow is established, or for which packets are transmitted via the corresponding IP flow. Via this associated application, the IP flow priority is applied to all IP flows established for the application (i.e. transmitting packets for the application). Thus, even if an IP flow priority is not correctly determined for an IP flow, by means of its association to an application and thus to one or more other IP flows, the correct IP flow priority may be applied to it (assuming that for at least one of the other IP flows, the IP flow priority has been correctly determined).

For example, the first IP flow priority indicator is based on a quality of service of the first application and the second IP flow priority indicator is based on a quality of service of the second application. The first and/or the second application may for example generate the data to be transmitted with reference to one of the respective plurality of IP flow connections. However, the first application and/or the second application may generate uplink data also for an IP flow which has not been previously received and stored.

Transmitting a packet based on an IP flow priority indicator (which may be seen as QoS indicator) may for example mean that the IP flow priority indicator is taken into account in the scheduling of the packet. For example, a first packet which is transmitted based on a first IP flow priority indicator is privileged (e.g. scheduled to be transmitted earlier) with respect to a second packet which is transmitted based on a second IP flow priority indicator lower than the first IP flow priority indicator.

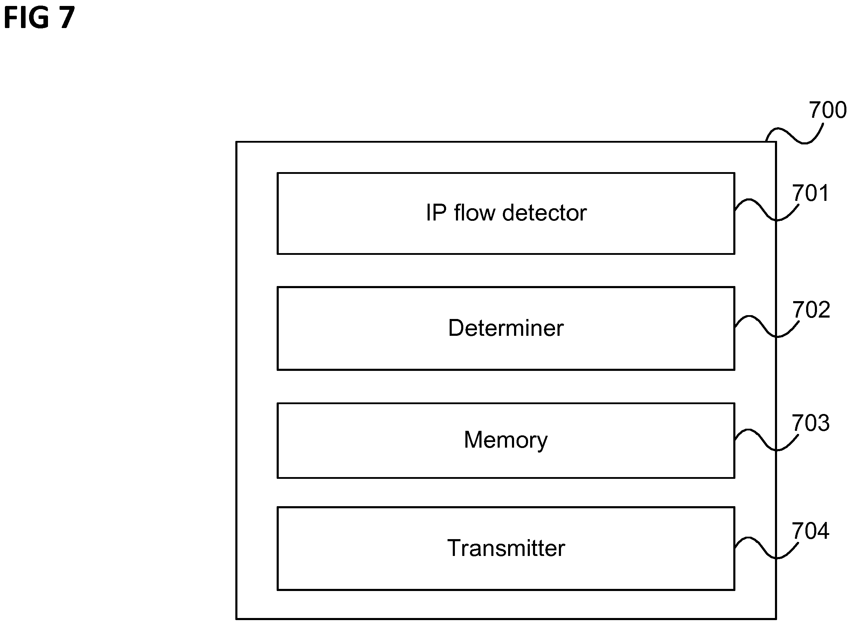

The method of figure 6 is for example performed by a communication device as illustrated in figure 7.

Figure 7 shows a communication device 700.

The communication device 700 includes an Internet Protocol (IP) flow detector 701 configured to detect a plurality of different first Internet Protocol (IP) flow connections for a first application, wherein each first IP flow connection of the plurality of first IP flow connections has assigned a respective IP flow priority indicator and to detect a plurality of different second IP flow connections for a second application, wherein each second IP flow connection of the plurality of second IP flow connections has assigned a respective IP flow priority indicator.

The communication device 700 further includes a determiner 702 configured to determine at least one first IP flow priority indicator of the detected plurality of first IP flow connections and to determine at least one second IP flow priority indicator of the detected plurality of second IP flow connections.

Further, the communication device 700 includes a memory 703 configured to store the determined at least one first IP flow priority indicator with a corresponding reference to the first application and configured to store the determined at least one second IP flow priority indicator with a corresponding reference to the second application.

The communication device 700 further includes a transmitter 704 configured to identify the application which generates data to be transmitted, wherein the data to be transmitted is generated by the first application and/or the second application, to select the stored at least one first IP flow priority indicator and/or second IP flow priority indicator referring to the first application and/or second application and to transmit the generated data based on the selected IP flow priority indicator.

It should be noted that embodiments and examples described in context of the method of figure 6 are analogously valid for the communication device 700 and vice versa.

The components of the communication device (e.g. the Internet Protocol flow detector, the determiner, the memory and the transmitter) may be implemented by one or more circuits.

The first application and the second application may each use or provide a communication service. In various embodiments, a communication service may include or may be a communication such as for example:
- a voice communication service (in other words, a communication service that only includes audio data);
- a video communication service (in other words, a communication service that includes video data and optionally in addition audio data and/or text data);
- a text communication service (in other words, a communication service that only includes text data);
- multimedia communication service (in other words, a communication service that includes video data, audio data and/or text data); and
- a machine communication service (in other words, a communication service that includes information reporting sensor data or sending action commands to or from a machine).

More concrete examples for a communication service may include:
- Voice over Long Term Evolution (VoLTE);
- Vehicle to Vehicle communication;
- Sensor readings from and actuation commands to machines like vending machines, solar panels, electric vehicle batteries, containers or construction machinery;
- Video streaming application;
- Virtual reality and augmented reality application;
- Audio streaming application;
- Mobile gaming application;
- Text message transmission; and the like.

In the following, various examples are described.
Example 1 is a method for transmitting data as illustrated in figure 6.
Example 2 is the method according to Example 1, comprising storing the determined at least one first IP flow priority indicator with a corresponding reference to the first application and the determined at least one second IP flow priority indicator with a corresponding reference to the second application together in a binding table.
Example 3 is the method according to Example 1 or 2, comprising executing the first application and the second application on a communication terminal.
Example 4 is the method according to any one of Example 3, wherein the data to be transmitted generated by the first application and/or the second application is client-side data generated in the communication terminal or server-side data generated in a server computer of a communication network.
Example 5 is the method according to Example 4, herein the first application and/or the second application each comprise a client-side instance executed by the communication terminal and a server-side instance executed by the server computer.
Example 6 is the method according to any one of Examples 3 to 5, wherein the data to be transmitted generated by the first application and/or the second application is data to be transmitted from the communication terminal to a communication network or data to be received by the communication terminal from a communication network.
Example 7 is the method according to any one of Examples 1 to 6, further comprising generating an identification of each IP flow connection wherein the identification is based on a combination of at least one of source IP address, destination IP address, source port, destination port and a protocol identifier.
Example 8 is the method according to any one of Examples 1 to 7, Comprising storing the determined at least one first IP flow priority indicator with a corresponding reference to the first application and an identification of at least one first IP flow for which it has been determined and storing the determined at least one second IP flow priority indicator with a corresponding reference to the second application and an identification of at least one second IP flow for which it has been determined.
Example 9 is the method according to any one of Examples 1 to 8, comprising determining the at least one first IP flow priority indicator of the detected plurality of first IP flow connections based on first packets marked with the at least one first IP flow priority indicator transmitted via the at least one of the first IP flow connections and determining the at least one second IP flow priority indicator of the detected plurality of second IP flow connections based on second packets marked with the at least one second IP flow priority indicator transmitted via the at least one of the second IP flow connections.
Example 10 is the method according to Example 9, wherein the first packets are downlink packets and the method comprises determining the at least one first IP flow priority indicator by a communication terminal or wherein the first packets are uplink packets and the method comprises determining the at least one first IP flow priority indicator by a communication network device.
Example 11 is the method according to Example 9 or 10, wherein the second packets are downlink packets and the method comprises determining the at least one second IP flow priority indicator by a communication terminal or wherein the second packets are uplink packets and the method comprises determining the at least one second IP flow priority indicator by a communication network device.
Example 12 is the method according to any one of Examples 9 to 11, wherein the first packets and the second packets are IP packets.
Example 13 is the method according to any one of Examples 9 to 12, wherein the first packets carry useful data generated by the first application and the second packets carry useful data generated by the second application.
Example 14 is the method according to any one of Examples 1 to 13, wherein the at least one first IP flow priority indicator is predetermined based on deep packet inspection of the first packets and the at least one second IP flow priority indicator is predetermined based on deep packet inspection of the second packets.
Example 15 is a communication device as illustrated in figure 7.

According to a further example, a method for transmitting data is provided including receiving a download packet via an IP connection, identifying a priority of the IP connection, identifying an application for which the download packet has been transmitted and transmitting an upload packet for the application via the IP connection or via a different IP connection using the identified priority of the IP connection.

According to a further example, a method to select the QoS flow for uplink data transmission is provided including:
- receiving a plurality of data units from a network,
- wherein each data unit includes a QoS flow indicator;
- identifying the application configured to receive one or more said data units from the network;
- transmitting one or more data units from the said application to the network;
- and a selecting,
   - based on said application identification and a stored QoS flow indicator for said application,
   - for each data unit of the plurality of data units transmitted from said application,
   - one QoS flow to transmit the data unit to the network.

It should be noted that embodiments described in context of one of the methods are analogously valid for the communication device and vice versa.

The scope of the invention is indicated by the appended claims and all changes which come within the meaning and range of equivalency of the claims are therefore intended to be embraced.

## Claims

1. A method (600) for transmitting data, comprising:
detecting (601) a plurality of different first Internet Protocol, IP, flow connections for a first application, wherein each IP flow connection of the plurality of first IP flow connections has assigned a respective QoS-IP flow priority indicator;
determining (602) a first QoS-IP flow priority indicator that is assigned to a first IP flow connection of the detected plurality of first IP flow connections;
identifying the first application, wherein the first IP flow connection is targeted to the first application;
storing (603) the determined first QoS-IP flow priority indicator with a corresponding reference referring to the first application and referring to the first IP flow connection if the first QoS-IP flow priority indicator is not a default QoS-IP flow priority indicator;
detecting (604) a plurality of different second IP flow connections for a second application, wherein each IP flow connection of the plurality of second IP flow connections has assigned a respective QoS-IP flow priority indicator;
determining (605) a second QoS-IP flow priority indicator that is assigned to a second IP flow connection of the detected plurality of second IP flow connections;
identifying the second application, wherein the second IP flow connection is targeted to the second application;
storing (606) the determined second QoS-IP flow priority indicator with a corresponding reference referring to the second application and referring to the second IP flow connection if the second QoS-IP flow priority indicator is not the default QoS-IP flow priority indicator;
an application of the first application and the second application generating (607) data to be transmitted via an IP flow connection;
identifying (608) the application which generates the data to be transmitted;
selecting (609) a stored QoS-IP flow priority indicator if the QoS-IP flow priority indicator is stored with a corresponding reference referring to the application and referring to the IP flow connection;
selecting a stored default QoS-IP flow priority indicator if no QoS-IP flow priority indicator is stored with a corresponding reference referring to the application and referring to the IP flow connection and if a QoS-IP flow priority indicator referring to the IP flow connection is the default QoS-IP flow priority; and
transmitting (610) the generated data via the IP flow connection based on the selected QoS-IP flow priority indicator.

2. The method according to claim 1, comprising storing the determined at least one first QoS-IP flow priority indicator with a corresponding reference to the first application and the determined at least one second QoS-IP flow priority indicator with a corresponding reference to the second application together in a binding table.

3. The method according to claim 1 or 2, comprising executing the first application and the second application on a communication terminal (401).

4. The method according to any one of claim 3, wherein the data to be transmitted generated by the first application and/or the second application is client-side data generated in the communication terminal (401) or server-side data generated in a server computer (402) of a communication network.

5. The method according to claim 4, herein the first application and/or the second application each comprise a client-side instance executed by the communication terminal (401) and a server-side instance executed by the server computer (402).

6. The method according to any one of claims 3 to 5, wherein the data to be transmitted generated by the first application and/or the second application is data to be transmitted from the communication terminal (402) to a communication network or data to be received by the communication terminal (402) from a communication network.

7. The method according to any one of claims 1 to 6, further comprising generating an identification of each IP flow connection wherein the identification is based on a combination of at least one of source IP address, destination IP address, source port, destination port and a protocol identifier.

8. The method according to any one of claims 1 to 7, Comprising storing the determined at least one first QoS-IP flow priority indicator with a corresponding reference to the first application and an identification of at least one first QoS-IP flow for which it has been determined and storing the determined at least one second IP flow priority indicator with a corresponding reference to the second application and an identification of at least one second IP flow for which it has been determined.

9. The method according to any one of claims 1 to 8, comprising determining the at least one first QoS-IP flow priority indicator of the detected plurality of first IP flow connections based on first packets marked with the at least one first QoS-IP flow priority indicator transmitted via the at least one of the first IP flow connections and determining the at least one second QoS-IP flow priority indicator of the detected plurality of second IP flow connections based on second packets marked with the at least one second QoS-IP flow priority indicator transmitted via the at least one of the second IP flow connections.

10. The method according to claim 9, wherein the first packets are downlink packets and the method comprises determining the at least one first QoS-IP flow priority indicator by a communication terminal (402) or wherein the first packets are uplink packets and the method comprises determining the at least one first QoS-IP flow priority indicator by a communication network device.

11. The method according to claim 9 or 10, wherein the second packets are downlink packets and the method comprises determining the at least one second QoS-IP flow priority indicator by a communication terminal (402) or wherein the second packets are uplink packets and the method comprises determining the at least one second QoS-IP flow priority indicator by a communication network device.

12. The method according to any one of claims 9 to 11, wherein the first packets and the second packets are IP packets.

13. The method according to any one of claims 9 to 12, wherein the first packets carry data generated by the first application and the second packets carry data generated by the second application.

14. The method according to any one of claims 1 to 13, wherein the at least one first QoS-IP flow priority indicator is predetermined based on deep packet inspection of the first packets and the at least one second QoS-IP flow priority indicator is predetermined based on deep packet inspection of the second packets.

15. A communication device (700) comprising:
an Internet Protocol IP flow detector (701) configured
to detect a plurality of different first Internet Protocol IP flow connections for a first application, wherein each IP flow connection of the plurality of first IP flow connections has assigned a respective QoS-IP flow priority indicator and
to detect a plurality of different second IP flow connections for a second application, wherein each IP flow connection of the plurality of second IP flow connections has assigned a respective QoS-IP flow priority indicator;
a determiner (702) configured
to determine a first QoS-IP flow priority indicator that is assigned to a first IP flow connection of the detected plurality of first IP flow connections,
to identify the first application, wherein the first IP flow connection is targeted to the first application,
to determine a second QoS-IP flow priority indicator that is assigned to a second IP flow connection of the detected plurality of second IP flow connections, and
to identify the second application, wherein the second IP flow connection is targeted to the second application;
a memory (703) configured
to store the determined first QoS-IP flow priority indicator with a corresponding reference referring to the first application and referring to the first IP flow connection if the first QoS-IP flow priority indicator is not a default QoS-IP flow priority indicator, and
to store the determined second QoS-IP flow priority indicator with a corresponding reference referring to the second application and referring to the second IP flow connection if the second QoS-IP flow priority indicator is not the default QoS-IP flow priority indicator;
a transmitter (704) configured
to identify an application which generates data to be transmitted via an IP flow connection, wherein the data to be transmitted is generated by the first application or the second application,
to select a stored QoS-IP flow priority indicator if the QoS-IP flow priority indicator is stored with a corresponding reference referring to the application and referring to the IP flow connection,
to select the default QoS-IP flow priority indicator if no QoS-IP flow priority indicator is stored with a corresponding reference referring to the application and referring to the IP flow connection and if a QoS-IP flow priority indicator referring to the IP flow connection is the default QoS-IP flow priority, and
to transmit the generated data via the IP flow connection based on the selected QoS-IP flow priority indicator.

## Patentansprüche

1. Ein Verfahren (600) zum Übertragen von Daten, umfassend:
Ermitteln (601) einer Vielzahl von unterschiedlichen ersten Internetprotokoll-, IP, Flussverbindungen für eine erste Anwendung, wobei jeder IP-Flussverbindung der Vielzahl von ersten IP-Flussverbindungen ein jeweiliger QoS-IP-Flussprioritätsindikator zugeordnet ist;
Bestimmen (602) eines ersten QoS-IP-Flussprioritätsindikators, der einer ersten IP-Flussverbindung der ermittelten Vielzahl von ersten IP-Flussverbindungen zugeordnet ist;
Identifizieren der ersten Anwendung, wobei die erste IP-Flussverbindung auf die erste Anwendung abgezielt ist;
Speichern (603) des bestimmten ersten QoS-IP-Flussprioritätsindikators mit einem korrespondierenden Verweis, der auf die erste Anwendung und die erste IP-Flussverbindung verweist, wenn der erste QoS-IP-Flussprioritätsindikator nicht ein Standard-QoS-IP-Flussprioritätsindikator ist;
Ermitteln (604) einer Vielzahl von unterschiedlichen zweiten IP-Flussverbindungen für eine zweite Anwendung, wobei jeder IP-Flussverbindung der Vielzahl von zweiten IP-Flussverbindungen ein jeweiliger QoS-IP-Flussprioritätsindikator zugeordnet ist;
Bestimmen (605) eines zweiten QoS-IP-Flussprioritätsindikators, der einer zweiten IP-Flussverbindung der ermittelten Vielzahl von zweiten IP-Flussverbindungen zugeordnet ist;
Identifizieren der zweiten Anwendung, wobei die zweite IP-Flussverbindung auf die zweite Anwendung abgezielt ist;
Speichern (606) des bestimmten zweiten QoS-IP-Flussprioritätsindikators mit einem korrespondierenden Verweis, der auf die zweite Anwendung und die zweite IP-Flussverbindung verweist, wenn der zweite QoS-IP-Flussprioritätsindikator nicht der Standard-QoS-IP-Flussprioritätsindikator ist;
Erzeugen (607), durch eine Anwendung aus der Gruppe der ersten Anwendung und der zweiten Anwendung, von über eine IP-Flussverbindung zu übertragenden Daten;
Identifizieren (608) der Anwendung, die die zu übertragenden Daten erzeugt;
Auswählen (609) eines gespeicherten QoS-IP-Flussprioritätsindikators, wenn der QoS-IP-Flussprioritätsindikator mit einem korrespondierenden Verweis, der auf die Anwendung und die IP-Flussverbindung verweist, gespeichert ist;
Auswählen eines gespeicherten Standard-QoS-IP-Flussprioritätsindikators, wenn kein QoS-IP-Flussprioritätsindikator mit einem korrespondierenden Verweis, der auf die Anwendung und die IP-Flussverbindung verweist, gespeichert ist und wenn ein QoS-IP-Flussprioritätsindikator, der auf die IP-Fluss-Verbindung verweist, die Standard-QoS-IP-Flusspriorität ist; und
Übertragen (610) der erzeugten Daten über die IP-Flussverbindung basierend auf dem ausgewählten QoS-IP-Flussprioritätsindikator.

2. Das Verfahren gemäß Anspruch 1, umfassend Speichern des bestimmten mindestens einen ersten QoS-IP-Flussprioritätsindikators mit einem korrespondierenden Verweis auf die erste Anwendung und des bestimmten mindestens einen zweiten QoS-IP-Flussprioritätsindikators mit einem korrespondierenden Verweis auf die zweite Anwendung gemeinsam in einer Verknüpfungstabelle.

3. Das Verfahren gemäß Anspruch 1 oder 2, umfassend Ausführen der ersten Anwendung und der zweiten Anwendung auf einer Kommunikationsendvorrichtung (401).

4. Das Verfahren gemäß einem der Ansprüche 3, wobei die zu übertragenden Daten, die von der ersten Anwendung und/oder der zweiten Anwendung erzeugt sind, anwenderseitige Daten, die in der Kommunikationsendvorrichtung (401) erzeugt sind, oder serverseitige Daten, die in einem Servercomputer (402) eines Kommunikationsnetzwerks erzeugt sind, sind.

5. Das Verfahren gemäß Anspruch 4, wobei die erste Anwendung und/oder die zweite Anwendung jeweils eine anwenderseitige Instanz, die von der Kommunikationsendvorrichtung (401) ausgeführt ist, und eine serverseitige Instanz, die von dem Servercomputer (402) ausgeführt ist, umfasst.

6. Das Verfahren gemäß einem der Ansprüche 3 bis 5, wobei die zu übertragenden Daten, die von der ersten Anwendung und/oder der zweiten Anwendung erzeugt sind, von der Kommunikationsendvorrichtung (402) an ein Kommunikationsnetzwerk zu übertragende Daten oder durch eine Kommunikationsendvorrichtung (402) von einem Kommunikationsnetzwerk zu empfangende Daten sind.

7. Das Verfahren gemäß einem der Ansprüche 1 bis 6, zusätzlich umfassend Erzeugen einer Identifikation von jeder IP-Flussverbindung, wobei die Identifikation auf einer Kombination von mindestens einem aus einer Quellen-IP-Adresse, Ziel-IP-Adresse, Quellport, Zielport und einer Protokollkennung basiert.

8. Das Verfahren gemäß einem der Ansprüche 1 bis 7, umfassend das Speichern des bestimmten mindestens einen ersten QoS-IP-Flussprioritätsindikators mit einem korrespondierenden Verweis auf die erste Anwendung und einer Identifikation mindestens einen ersten QoS-IP-Flusses, für den er bestimmt wurde, und Speichern des bestimmten mindestens einen zweiten IP-Flussprioritätsindikators mit einem korrespondierenden Verweis auf die zweite Anwendung und einer Identifikation eines zweiten IP-Flusses, für den er bestimmt wurde.

9. Das Verfahren gemäß einem der Ansprüche 1 bis 8, umfassend das Bestimmen des mindestens einen ersten QoS-IP-Flussprioritätsindikators der ermittelten Vielzahl von ersten IP-Flussverbindungen basierend auf mit dem mindestens einen ersten QoS-IP-Flussprioritätsindikator markierten ersten Paketen, die über die mindestens eine der ersten IP-Flussverbindungen übertragen wurden, und Bestimmen des mindestens einen zweiten QoS-IP-Flussprioritätsindikators der ermittelten Vielzahl von zweiten IP-Flussverbindungen basierend auf mit dem mindestens einen zweiten QoS-IP-Flussprioritätsindikator markierten zweiten Paketen, die über die mindestens eine der zweiten IP-Flussverbindungen übertragen wurden.

10. Das Verfahren gemäß Anspruch 9, wobei die ersten Pakete Abwärtsverbindungspakete sind und das Verfahren das Bestimmen des mindestens einen ersten QoS-IP-Flussprioritätsindikators durch eine Kommunikationsendvorrichtung (402) umfasst oder wobei die ersten Pakete Aufwärtsverbindungspakete sind und das Verfahren das Bestimmen des mindestens einen ersten QoS-IP-Flussprioritätsindikators durch eine Kommunikationsnetzwerkvorrichtung umfasst.

11. Das Verfahren gemäß Anspruch 9 oder 10, wobei die zweiten Pakete Abwärtsverbindungspakete und das Verfahren das Bestimmen des mindestens einen zweiten QoS-IP-Flussprioritätsindikators durch eine Kommunikationsendvorrichtung (402) umfasst oder wobei die zweiten Pakete Aufwärtsverbindungspakete und das Verfahren das Bestimmen des mindestens einen zweiten QoS-IP-Flussprioritätsindikators durch eine Kommunikationsnetzwerkvorrichtung umfasst.

12. Das Verfahren gemäß einem der Ansprüche 9 bis 11, wobei die ersten Pakete und die zweiten Pakete IP-Pakete sind.

13. Das Verfahren gemäß einem der Ansprüche 9 bis 12, wobei die ersten Pakete Daten, die durch die erste Anwendung erzeugt sind, mitführen und die zweiten Pakete Daten, die durch die zweite Anwendung erzeugt sind, mitführen.

14. Das Verfahren gemäß einem der Ansprüche 1 bis 13, wobei der mindestens eine erste QoS-IP-Flussprioritätsindikator basierend auf Deep Packet Inspection der ersten Pakete vorab bestimmt ist und der mindestens eine zweite QoS-IP-Flussprioritätsindikator basierend auf Deep Packet Inspection der zweiten Pakete vorab bestimmt ist.

15. Eine Kommunikationsvorrichtung (700) umfassend:
einen Internetprotokoll-IP-Flussdetektor (701), der konfiguriert ist, um eine Vielzahl von unterschiedlichen ersten Internetprotokoll-IP-Flussverbindungen für eine erste Anwendung zu ermitteln, wobei jeder IP-Flussverbindung der Vielzahl von ersten IP-Flussverbindungen ein jeweiliger QoS-IP-Flussprioritätsindikator zugeordnet ist, und
um eine Vielzahl von unterschiedlichen zweiten IP-Flussverbindungen für eine zweite Anwendung zu ermitteln, wobei jeder IP-Flussverbindung der Vielzahl von zweiten IP-Flussverbindungen ein jeweiliger QoS-IP-Flussprioritätsindikator zugeordnet ist;
einen Bestimmer (702), der konfiguriert ist,
um einen ersten QoS-IP-Flussprioritätsindikator, der einer ersten IP-Flussverbindung der ermittelten Vielzahl von ersten IP-Flussverbindungen zugeordnet ist, zu bestimmen,
um die erste Anwendung zu identifizieren, wobei die erste IP-Flussverbindung auf die erste Anwendung abgezielt ist,
um einen zweiten QoS-IP-Flussprioritätsindikator, der einer zweiten IP-Flussverbindung der ermittelten Vielzahl von zweiten IP-Flussverbindungen zugeordnet ist, zu bestimmen, und
um die zweite Anwendung zu identifizieren, wobei die zweite IP-Flussverbindung auf die zweite Anwendung abgezielt ist;
einen Speicher (703), der konfiguriert ist,
um den bestimmten ersten QoS-IP-Flussprioritätsindikator mit einem korrespondierenden Verweis, der auf die erste Anwendung und die erste IP-Flussverbindung verweist, zu speichern, wenn der erste QoS-IP-Flussprioritätsindikator nicht ein Standard-QoS-IP-Flussprioritätsindikator ist, und
um den bestimmten zweiten QoS-IP-Flussprioritätsindikator mit einem korrespondierenden Verweis, der auf die zweite Anwendung und die zweite IP-Flussverbindung verweist, zu speichern, wenn der zweite QoS-IP-Flussprioritätsindikator nicht der Standard-QoS-IP-Flussprioritätsindikator ist;
einen Sender (704), der konfiguriert ist,
um eine Anwendung, die über eine IP-Flussverbindung zu übertragende Daten erzeugt, zu identifizieren, wobei die zu übertragenden Daten durch die erste Anwendung oder die zweite Anwendung erzeugt sind,
um einen gespeicherten QoS-IP-Flussprioritätsindikator auszuwählen, wenn der QoS-IP-Flussprioritätsindikator mit einem korrespondierenden Verweis, der auf die Anwendung und die IP-Flussverbindung verweist, gespeichert ist,
um den Standard-QoS-IP-Flussprioritätsindikator auszuwählen, wenn kein QoS-IP-Flussprioritätsindikator mit einem korrespondierenden Verweis, der auf die Anwendung und die IP-Flussverbindung verweist, gespeichert ist und wenn ein QoS-IP-Flussprioritätsindikator, der auf die IP-Flussverbindung verweist, die Standard-QoS-IP-Flusspriorität ist, und
um die erzeugten Daten über die IP-Flussverbindung basierend auf dem ausgewählten QoS-IP-Flussprioritätsindikator zu übertragen.

## Revendications

1. Procédé (600) de transmission de données, comprenant les étapes suivantes :
détecter (601) une pluralité de premières connexions différentes de flux Internet Protocol, IP, d'une première application, où chaque connexion de flux IP de la pluralité de premières connexions de flux IP, se voit attribuer un indicateur de priorité de flux QoS-IP respectif;
déterminer (602) un premier indicateur de priorité de flux QoS-IP qui est attribué à une première connexion de flux IP de la pluralité détectée de premières connexions de flux IP ;
identifier la première application, où la première connexion de flux IP est destinée à la première application ;
stocker (603) le premier indicateur de priorité de flux QoS-IP déterminé, avec une référence correspondante se rapportant à la première application, et se rapportant à la première connexion de flux IP si le premier indicateur de priorité de flux QoS-IP n'est pas un indicateur de priorité de flux QoS-IP par défaut ;
détecter (604) une pluralité de secondes connexions différentes de flux IP d'une seconde application, où chaque connexion de flux IP de la pluralité de secondes connexions de flux IP, se voit attribuer un indicateur de priorité de flux QoS-IP respectif ;
déterminer (605) un second indicateur de priorité de flux QoS-IP qui est attribué à une seconde connexion de flux IP de la pluralité détectée de secondes connexions de flux IP ;
identifier la seconde application, où la seconde connexion de flux IP est destinée à la seconde application ;
stocker (606) le second indicateur de priorité de flux QoS-IP déterminé, avec une référence correspondante se rapportant à la seconde application, et se rapportant à la seconde connexion de flux IP si le second indicateur de priorité de flux QoS-IP n'est pas l'indicateur de priorité de flux QoS-IP par défaut ;
une application de la première application et la seconde application générant (607) des données à transmettre par l'intermédiaire d'une connexion de flux IP ;
identifier (608) l'application qui génère les données à transmettre ;
sélectionner (609) un indicateur de priorité de flux QoS-IP stocké si l'indicateur de priorité de flux QoS-IP est stocké avec une référence correspondante se rapportant à l'application, et se rapportant à la connexion de flux IP ;
sélectionner un indicateur de priorité de flux QoS-IP par défaut stocké si aucun indicateur de priorité de flux QoS-IP n'est stocké avec une référence correspondante se rapportant à l'application, et se rapportant à la connexion de flux IP, et si un indicateur de priorité de flux QoS-IP se rapportant à la connexion de flux IP, est l'indicateur de priorité de flux QoS-IP par défaut ; et
transmettre (610) les données générées par l'intermédiaire de la connexion de flux IP sur la base de l'indicateur de priorité de flux QoS-IP sélectionné.

2. Procédé selon la revendication 1, comprenant une étape consistant à stocker ensemble dans une table de liaison, le ou les premiers indicateurs de priorité de flux QoS-IP déterminés, avec une référence correspondant à la première application, et le ou les seconds indicateurs de priorité de flux QoS-IP déterminés, avec une référence correspondant à la seconde application.

3. Procédé selon la revendication 1 ou 2, comprenant une étape consistant à exécuter la première application et la seconde application sur un terminal de communication (401).

4. Procédé selon la revendication 3, où les données à transmettre générées par la première application et / ou par la seconde application, sont des données du côté client générées dans le terminal de communication (401), ou des données du côté serveur générées dans un ordinateur serveur (402) d'un réseau de communication.

5. Procédé selon la revendication 4, où la première application et / ou la deuxième application comprennent chacune une instance du côté client exécutée par le terminal de communication (401), et une instance du côté serveur exécutée par l'ordinateur serveur (402).

6. Procédé selon l'une quelconque des revendications 3 à 5, où les données à transmettre générées par la première application et / ou par la seconde application, sont des données à transmettre à partir du terminal de communication (402) vers un réseau de communication, ou des données à recevoir par le terminal de communication (402) en provenance d'un réseau de communication.

7. Procédé selon l'une quelconque des revendications 1 à 6, comprenant en outre une étape consistant à générer une identification de chaque connexion de flux IP, où l'identification est basée sur une association de l'un au moins d'une adresse IP de source, d'une adresse IP de destination, du port de source, du port de destination et d'un identifiant de protocole.

8. Procédé selon l'une quelconque des revendications 1 à 7, comprenant une étape consistant à stocker le ou les premiers indicateurs de priorité de flux QoS-IP déterminés, avec une référence correspondant à la première application, et une identification d'au moins un premier flux QoS-IP pour lequel il a été déterminé, et stocker le ou les seconds indicateurs de priorité de flux IP déterminés, avec une référence correspondant à la seconde application, et une identification d'au moins un second flux IP pour lequel il a été déterminé.

9. Procédé selon l'une quelconque des revendications 1 à 8, comprenant une étape consistant à déterminer le ou les premiers indicateurs de priorité de flux QoS-IP de la pluralité détectée de premières connexions de flux IP, sur la base de premiers paquets marqués avec le ou les premiers indicateurs de priorité de flux QoS-IP transmis par l'intermédiaire de la ou des premières connexions de flux IP, et déterminer le ou les seconds indicateurs de priorité de flux QoS-IP de la pluralité détectée de secondes connexions de flux IP, sur la base de seconds paquets marqués avec le ou les seconds indicateurs de priorité de flux QoS-IP transmis par l'intermédiaire de la ou des secondes connexions de flux IP.

10. Procédé selon la revendication 9, où les premiers paquets sont des paquets de liaison descendante, et le procédé comprend une étape consistant à déterminer le ou les premiers indicateurs de priorité de flux QoS-IP avec un terminal de communication (402) ou, où les premiers paquets sont des paquets de liaison montante, et le procédé comprend une étape consistant à déterminer le ou les premiers indicateurs de priorité de flux QoS-IP, avec un dispositif du réseau de communication.

11. Procédé selon la revendication 9 ou 10, où les seconds paquets sont des paquets de liaison descendante, et le procédé comprend une étape consistant à déterminer le ou les seconds indicateurs de priorité de flux QoS-IP avec un terminal de communication (402) ou, où les seconds paquets sont des paquets de liaison montante, et le procédé comprend une étape consistant à déterminer le ou les seconds indicateurs de priorité de flux QoS-IP, avec un dispositif du réseau de communication.

12. Procédé selon l'une quelconque des revendications 9 à 11, où les premiers paquets et les seconds paquets sont des paquets IP.

13. Procédé selon l'une quelconque des revendications 9 à 12, où les premiers paquets portent des données générées par la première application, et les deuxièmes paquets portent des données produites par la deuxième application.

14. Procédé selon l'une quelconque des revendications 1 à 13, où le ou les premiers indicateurs de priorité de flux QoS-IP sont prédéterminés sur la base d'une inspection profonde de paquet des premiers paquets, et le ou les seconds indicateurs de priorité de flux QoS-IP sont prédéterminés sur la base d'une inspection profonde de paquet des seconds paquets.

15. Dispositif de communication (700) comprenant :
un détecteur de flux Internet Protocol, IP, (701), configuré :
pour détecter une pluralité de premières connexions différentes de flux Internet Protocol, IP, d'une première application, où chaque connexion de flux IP de la pluralité de premières connexions de flux IP, se voit attribuer un indicateur de priorité de flux QoS-IP respectif, et
pour détecter une pluralité de secondes connexions différentes de flux IP d'une seconde application, où chaque connexion de flux IP de la pluralité de secondes connexions de flux IP, se voit attribuer un indicateur de priorité de flux QoS-IP respectif ;
un dispositif de détermination (702) configuré :
pour déterminer un premier indicateur de priorité de flux QoS-IP qui est attribué à une première connexion de flux IP de la pluralité détectée de premières connexions de flux IP,
pour identifier la première application, où la première connexion de flux IP est destinée à la première application,
pour déterminer un second indicateur de priorité de flux QoS-IP qui est attribué à une seconde connexion de flux IP de la pluralité détectée de secondes connexions de flux IP, et
pour identifier la seconde application, où la seconde connexion de flux IP est destinée à la seconde application ;
une mémoire (703) configurée :
pour stocker le premier indicateur de priorité de flux QoS-IP déterminé, avec une référence correspondante se rapportant à la première application, et se rapportant à la première connexion de flux IP si le premier indicateur de priorité de flux QoS-IP n'est pas un indicateur de priorité de flux QoS-IP par défaut, et
pour stocker le second indicateur de priorité de flux QoS-IP déterminé, avec une référence correspondante se rapportant à la seconde application, et se rapportant à la seconde connexion de flux IP si le second indicateur de priorité de flux QoS-IP n'est pas l'indicateur de priorité de flux QoS-IP par défaut ;
un émetteur (704) configuré :
pour identifier une application qui génère des données à transmettre par l'intermédiaire d'une connexion de flux IP, où les données à transmettre sont générées par la première application ou par la seconde application,
pour sélectionner un indicateur de priorité de flux QoS-IP stocké si l'indicateur de priorité de flux QoS-IP est stocké avec une référence correspondante se rapportant à l'application, et se rapportant à la connexion de flux IP,
pour sélectionner l'indicateur de priorité de flux QoS-IP par défaut stocké si aucun indicateur de priorité de flux QoS-IP n'est stocké avec une référence correspondante se rapportant à l'application, et se rapportant à la connexion de flux IP, et si un indicateur de priorité de flux QoS-IP se rapportant à la connexion de flux IP, est l'indicateur de priorité de flux QoS-IP par défaut, et
pour transmettre les données générées par l'intermédiaire de la connexion de flux IP sur la base de l'indicateur de priorité de flux QoS-IP sélectionné.
